(19) Europäisches Patentamt / European Patent Office / Office européen des brevets

(11) **EP 2 309 652 B1**

(12) **EUROPEAN PATENT SPECIFICATION**

(45) Date of publication and mention
of the grant of the patent:
**12.08.2015 Bulletin 2015/33**

(51) Int Cl.:
*H04B 1/12* *(2006.01)*

(21) Application number: **10186716.6**

(22) Date of filing: **06.10.2010**

(54) **Electronic receiver for amplitude modulated signals, and corresponding processing method**

Elektronischer Empfänger für amplitudenmodulierte Signale, und entsprechendes Verarbeitungsverfahren

Récepteur électronique pour signaux modulés en amplitude, et procédé de traitement correspondant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2009 IT TO20090762**

(43) Date of publication of application:
**13.04.2011 Bulletin 2011/15**

(73) Proprietor: **SELEX ES S.p.A.**
**Roma (IT)**

(72) Inventors:
• **Gualtieri, Francesco**
**59100 Prato (IT)**
• **Menci, Simone**
**50013 Campi Bisenzio (IT)**

(74) Representative: **Bergadano, Mirko et al**
**Studio Torta S.p.A.**
**Via Viotti, 9**
**10121 Torino (IT)**

(56) References cited:
**EP-A1- 1 808 965     WO-A1-2004/114617**
**US-A- 6 072 994**

**Description**

The present invention relates to an electronic receiver for amplitude-modulated signals and to a corresponding processing method.

As is known, so-called amplitude modulation - double side band (AM-DSB), which in general will be referred to also simply as "amplitude modulation" or "AM modulation", is a technique that enables transmission of information using a carrier signal, which is typically harmonic with a frequency belonging to the radio-frequency range, and which will be referred to hereinafter for brevity as "carrier".

In greater detail, assuming that associated to the aforementioned information is an information signal, amplitude modulation envisages modulation of the amplitude of the carrier in a way proportional to the amplitude of the information signal so as to obtain a modulated signal, which has the same frequency as that of the carrier. For example, in the case of information of a sound type, the information signal is a pressure signal, with which, instant by instant, the amplitude of the carrier is modulated. At a terminological level, in general the information signal is also referred to as "modulating signal".

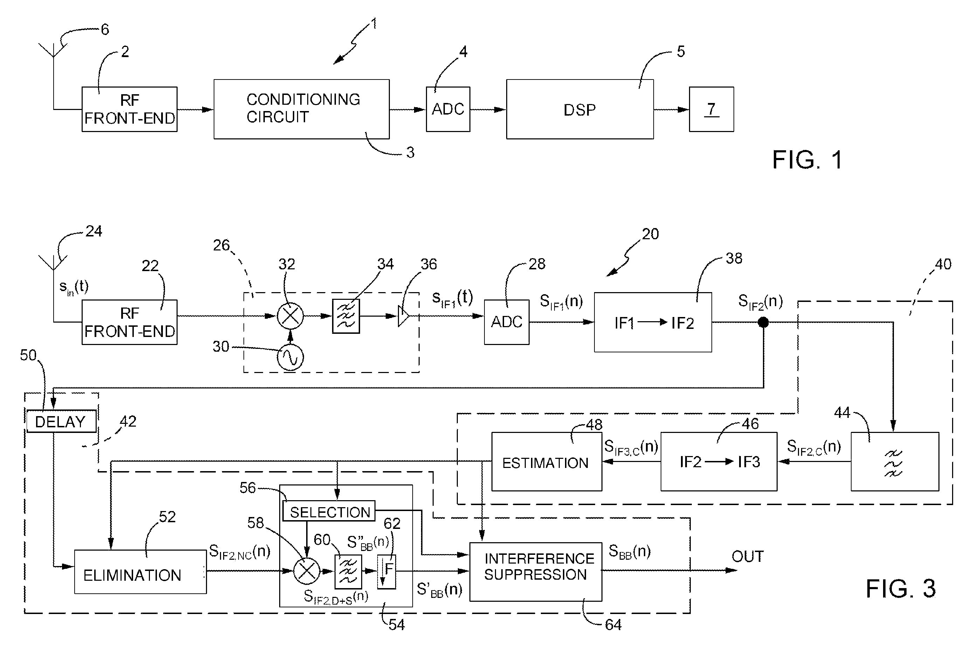

As is known, to receive the amplitude-modulated signals, it is possible to resort to an electronic receiver of the type shown in Figure 1.

In detail, the electronic receiver, designated as a whole by 1, comprises: a radio-frequency pre-processing electronic circuit, generally known as front-end circuit and designated by 2; an electronic conditioning circuit 3, connected to the front-end circuit 2; an analog-to-digital converter 4, connected to the electronic conditioning circuit 3; and a digital processing system 5, connected to the analog-to-digital converter 4.

In use, the electronic receiver 1 is connected to an antenna 6, in such a way that, when the antenna 6 receives an input signal that is amplitude-modulated by a modulating signal, the input signal is supplied to the front-end circuit 2, which carries out an adaptation of the input signal to the characteristics of the electronic conditioning circuit 3. Typically, the front-end circuit 2 adapts the dynamics of the input signal to that of the electronic conditioning circuit 3.

Next, the input signal is supplied, as adapted by the front-end circuit 2, to the electronic conditioning circuit 3, which typically carries out operations of conversion to the intermediate frequency (also known as subconversion operations), amplification, and filtering, thus generating a processed analog signal. In detail, the electronic conditioning circuit 3 typically comprises a local oscillator and a mixer (which are not shown), by means of which it converts the input signal to an intermediate frequency IF, according to a heterodyne or superheterodyne scheme. In particular, if we designate by fp the frequency of the carrier of the input signal as received by the antenna 6, and by $f_{loc}$ the frequency of the local oscillator, the frequency of the local oscillator is tuned in such a way that the relation $f_p\text{-}f_{loc}$=IF applies.

The processed analog signal is then supplied to the analog-to-digital converter 4, which operates at a sampling frequency $f_s$ and generates samples of the processed analog signal.

The samples of the processed analog signal are supplied to the digital processing system 5, which carries out operations of decimation and filtering thereof. In particular, typically the samples of the processed analog signal are decimated and filtered in such a way as to select, from among the replicas of the spectrum of the processed analog signal generated by decimation, the baseband replica. The baseband samples of the modulating signal can then be used by one or more electronic devices 7 set downstream the electronic receiver 1.

Operatively, the digital processing system 5 carries out a demodulation of the modulating signal. In particular, the digital processing system 5 functions as numeric equivalent of the envelope-demodulator circuit traditionally used in analog circuits for demodulating amplitude-modulated signals, said envelope-demodulator circuit comprising a diode and a capacitor. For example, electronic receivers 1 are known in which the sampling frequency $f_s$ is four times the intermediate frequency IF in such a way that the samples of the processed analog signal are alternately samples in phase and samples in quadrature of the input signal, but for a difference of sign.

In general, the electronic receiver 1 is sized, and hence optimized, as a function of an expected frequency, i.e., of the frequency of an expected carrier, which is in turn the carrier of expected input signals. The expected input signals are the (amplitude-modulated) signals that are expected to be received by the electronic receiver 1 in the application for which the electronic receiver 1 itself is devised and, in ultimate analysis, sized.

In addition, the electronic receiver 1 is optimized as a function of an expected band, i.e., a frequency band in which the spectra of modulating signals are expected to be (substantially) contained, i.e., the spectra of the modulating signals that are expected to be used for generating the expected input signals.

In particular, the front-end circuit 2 and the electronic conditioning circuit 3 are sized as a function of the expected frequency. In addition, the electronic conditioning circuit 3, the analog-to-digital converter 4, and the digital processing system 5 are sized in such a way that the operations of conversion to the intermediate frequency IF and of conversion in baseband are optimized as a function of the expected band.

Evidently, the aforementioned expected band depends upon the type of application envisaged for the electronic receiver 1. For example, in the case of voice communication, and hence in the case of information of a sound type, the expected band can coincide with the audio band, comprised approximately between 0.3 kHz and 3.4 kHz.

The electronic receiver 1 described is a receiver of an incoherent type, and enables effective demodulation of the input signal. In addition, in order to increase the transmission capacity, current telecommunications systems that make use of AM modulation resort to a plurality of carriers, each of which has a respective nominal frequency, which defines a corresponding communication channel.

At a terminological level, by "nominal frequency of a carrier" is meant the frequency that this carrier would theoretically have if it were generated by an ideal oscillator operating at the nominal frequency. In the sequel of the present document reference will be made, instead, to the effective frequency of a carrier to indicate the frequency of the carrier as received by an electronic receiver. Evidently, given a carrier, generated by a real oscillator (for example, forming part of a transmitter) operating at a nominal frequency, and received by a receiver with an effective frequency, the deviation between the effective frequency and the nominal frequency depends upon factors that comprise:

- the fact that the real oscillator generates the carrier with a transmission frequency that is inevitably different from the nominal frequency on account of non-idealities (offsets and drifts) of the real oscillator itself; and
- the fact that the transmitter to which the real oscillator belongs and the receiver are in motion with respect to one another, with the consequence that, from the standpoint of the receiver, the carrier is affected by the Doppler effect, and hence the effective frequency is different from the transmission frequency.

Typically, the nominal frequencies of the carriers, and hence the communication channels, are equally spaced in frequency, with a nominal spacing that depends upon the expected band. In addition, each communication channel can be used for transmitting a respective modulated signal. Consequently, in general, the electronic receiver 1 receives, simultaneously with the aforementioned input signal, further signals, in the case in point the modulated signals transmitted in the aforementioned communication channels.

In these conditions, the performance of the electronic receiver 1 might decay. In fact, assuming that in one and the same instant the electronic receiver 1 receives, in addition to the aforementioned input signal, an additional signal, and assuming that the respective carriers of the input signal and of the additional signal are adjacent to one another and with effective frequencies ideally equal to the respective nominal frequencies, between the input signal and the additional signal beats are created. If the effective frequencies of the carriers of the input signal and of the additional signal are such that the beats fall in the expected band, the baseband samples supplied by the digital processing system 5 are affected by these beats.

In order to overcome the problem described, the nominal spacing of the carriers is established as a function of the expected band in such a way that, in the absence of Doppler effect and in the absence of offsets and drifts, any possible beats that are created at the electronic receiver 1 between different carriers fall outside the expected band.

It follows that, in the absence of Doppler effect, the electronic receiver 1 enables demodulation of the aforementioned input signal also in the presence of further signals, after prior appropriate tuning of the local oscillator of the conditioning circuit 3 as a function of the nominal frequency of the carrier of the input signal.

There exist, however, situations in which, also in the presence of a correct sizing of the nominal spacing, the electronic receiver 1 can undergo a degradation of performance. An example of said situations is in the field of aeronautics, where AM modulation is today used in order to enable communications between pilots on board aeroplanes and flight controllers operating on the ground.

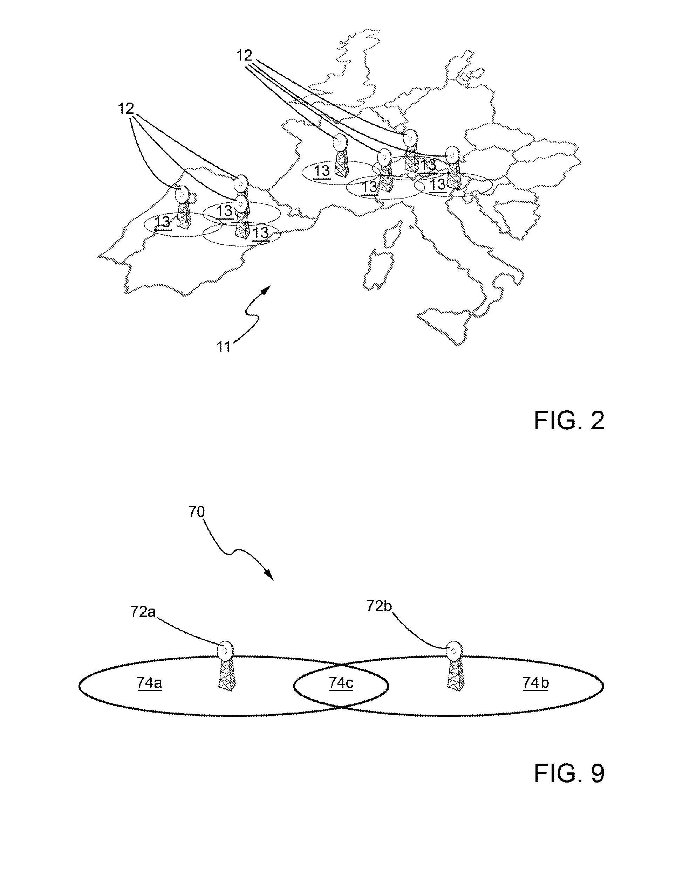

In detail, there is today available a ground network of the type shown in Figure 2, and designated by 11, which is formed by a plurality of control stations 12 distributed over the surface of the Earth.

Each control station 12 is located, to a first approximation, at the centre of a respective area of coverage 13 of a circular shape.

Given a considered control station 12, the respective area of coverage 13 is the area in which an aeroplane that flies over the area of coverage 13 itself is able to receive signals emitted by the considered control station 12, which will be referred hereinafter as "control signals". Evidently, assuming that the control stations 12 transmit control signals with a given transmission power, the extension of the areas of coverage 13 depends upon the given transmission power.

Typically, the radius of a single area of coverage 13 is of the order of a few tens or a few hundreds of kilometres.

Operatively, the control signals are amplitude-modulated in such a way as to convey the information associated to the voices of the flight controllers. In order to enable the pilots to hear the flight controllers, each aeroplane is equipped, not only with a respective transmitter, but also with a respective electronic receiver 1.

In greater detail, generally each control station 12 has available N carriers, each having a respective nominal frequency, which hence define N communication channels. Typically, said N communication channels are not the same for all the control stations 12. In addition, it is possible for some control stations to have available a different number of communication channels.

In greater detail, at a given instant of time, each control station 12 communicates with one or more aeroplanes, which, at the given instant of time, fly over the respective area of coverage 13, using for this purpose a respective communication channel, i.e., a respective nominal frequency.

For example, once again with reference to the aforementioned considered control station 12, it communicates with each aeroplane that flies over the respective area of coverage 13 using a respective communication channel, which is hence associated to the considered control station 12 itself. In other words, the considered control station 12 transmits its own control signals using a carrier having as nominal frequency the nominal frequency of the communication channel associated to the considered control station 12 itself. In turn, to communicate with the considered control station 12, the aeroplanes tune the local oscillators of the electronic conditioning circuits 3 of the respective electronic receivers 1 as a function of the nominal frequency used by the considered control station 12.

The disposition of the control stations 12 on the Earth surface is such that, in general, a single point of the Earth surface itself belongs to not more than two different areas of coverage 13, with limited exceptions in which single points belong to three different areas of coverage 13.

Consequently, given any point of the Earth surface, two alternatives are substantially possible (if we neglect the case where the point belongs to more than two areas of coverage 13) :

    i) the point belongs to a single area of coverage 13;
    ii) the point belongs to a first and a second area of coverage 13 corresponding, respectively, to a first control station 12 and a second control station 12.

In the case i), any aeroplane that is flying over the point receives only the control signals transmitted by the control station 12 of the single area of coverage; consequently, no interference is created.

Instead, in the case ii), any aeroplane that is flying over the point receives both the control signals transmitted by the first control station 12 and the control signals transmitted by the second control station 12, with the risk of possible interference.

In particular, assuming that both the first control station 12 and the second control station 12 use one and the same communication channel, the aeroplane receives a first carrier and a second carrier, which are generated, respectively, by the first control station 12 and by the second control station 12, and have the same nominal frequency. Inevitably, said first and second carriers have different effective frequencies, with consequent generation of beats that may fall in the expected band, degrading the communications between the aeroplane and the first and second control stations 12.

Precisely to prevent the phenomenon described, the communication channels used by the control stations 12 are such that two contiguous control stations, i.e., with areas of coverage 13 overlapping, do not use one and the same communication channel. In this way, degradation of the performance of the electronic receiver 1 is prevented; however, at each change of area of coverage 13, the aeroplanes must carry out a switching of frequency, tuning the electronic receiver 1, and in particular the local oscillator of the electronic conditioning circuit 3.

In order to enable a greater spatial re-use of the communication channels and extend the geographical coverage of each communication channel, known to the art is the so-called frequency-offset transmission, also known as CLIMAX, which envisages that contiguous control stations 12 use one and the same communication channel, but transmit using carriers having nominal frequencies translated by respective (and opposite) offsets with respect to the nominal frequency of the communication channel itself.

Once again with reference to the aforementioned case ii), the CLIMAX transmission envisages that the first and second control stations 12 communicate with the aeroplane through one and the same communication channel, for example defined by a nominal frequency $f_0$, and that the first and second carriers have nominal frequencies equal to $f_0$-$\Delta'$ and $f_0$+$\Delta'$, respectively (or vice versa), $\Delta'$ being a first offset. In other words, the first and second carriers have nominal frequencies translated, with respect to the nominal frequency $f_0$, by two offsets that are equal in modulus but have an opposite sign. In this way, the interference between the control signals transmitted by first and second control stations 12 is considerably attenuated.

Increase of the number of offsets for each communication channel enables increase of spatial re-use of the communication channels; however, the increase in the number of offsets is limited by the nominal spacing of the communication channels themselves, and hence by the expected band. Currently, CLIMAX transmission envisages up to five different offsets for each communication channel (in particular, this applies in the case of nominal spacing of 25 kHz, whereas in the case of nominal spacing of 8.33 kHz the offsets available are two), enabling the use of one and the same communication channel within a macroarea formed by not more than five different contiguous areas of coverage, i.e., overlapping two by two. Consequently, also CLIMAX transmission does not eliminate the need to carry out, on the part of the electronic receivers on board the aeroplanes, switchings of frequency in the case where the aeroplanes pass from a first macroarea to a second macroarea.

The patent application EP1808965 discloses a noise suppresser which includes a noise estimation unit which estimates a noise pattern mixed in an input signal. The patent US 6,072,994 discloses a digitally programmable multifunction radio system architecture that partitions or divides the functions of a radio into channels and divides the functions of each channel into two major functions: 1) antenna interface and power amplification; and 2) hardwired mixing and signal processing.

Furthermore, the patent application WO2004/114617 discloses a narrowband interference suppression system for OFDM systems; in particular, this suppression system carries out an estimation of the parameters of a number of narrowband interferers, forms an excision filter using the estimated parameters and inserts the excision filter into an OFDM receiver.

The aim of the present invention is to provide an electronic receiver that will solve at least in part the drawbacks of the known art.

According to the present invention, an electronic receiver for amplitude-modulated signals, a method for processing amplitude-modulated signals, and a communication method are provided as defined, respectively, in claims 1, 12 and 22.

For a better understanding of the invention, embodiments thereof are now described, purely by way of non-limiting example and with reference to the attached drawings, wherein:

- Figure 1 shows a block diagram of an electronic receiver of a known type;
- Figure 2 is a schematic illustration of portions of a ground network of a known type, for communications with aircraft;
- Figure 3 shows a block diagram of an electronic receiver according to the present invention;
- Figures 4-7 show portions of frequency spectra of signals;
- Figure 8 shows a block diagram of operations performed by the present electronic receiver; and
- Figure 9 is a schematic illustration of a portion of a ground network for communications with aircraft, according to the present invention.

Figure 3 shows an electronic receiver, designated as a whole by 20. The electronic receiver 20 comprises: an electronic front-end circuit 22, of a type in itself known and with which the electronic receiver 20 connects to an antenna 24; an electronic conditioning circuit 26, which is also of a type in itself known and is connected to the electronic front-end circuit 22; and an analog-to-digital converter 28, which is of a known type and is connected to the electronic conditioning circuit 26.

In greater detail, the electronic conditioning circuit 26 comprises a local oscillator 30 of a tunable type, a mixer 32, an analog filter 34 and an amplifier 36 (optional). In particular, the mixer 32 has two inputs connected, respectively, to the electronic front-end circuit 22 and to the local oscillator 30, and an output connected to the analog filter 34. The amplifier 36 is connected to the analog filter 34.

Assuming that the antenna 24 receives at input a global signal $s_{in}(t)$, in a way in itself known the electronic front-end circuit 22 adapts the electrical characteristics (for example, the voltage) of the global signal $s_{in}(t)$ to those of the electronic conditioning circuit 26. In turn, the electronic conditioning circuit 26 generates, starting from the global signal $s_{in}(t)$, an intermediate signal $s_{IF1}(t)$.

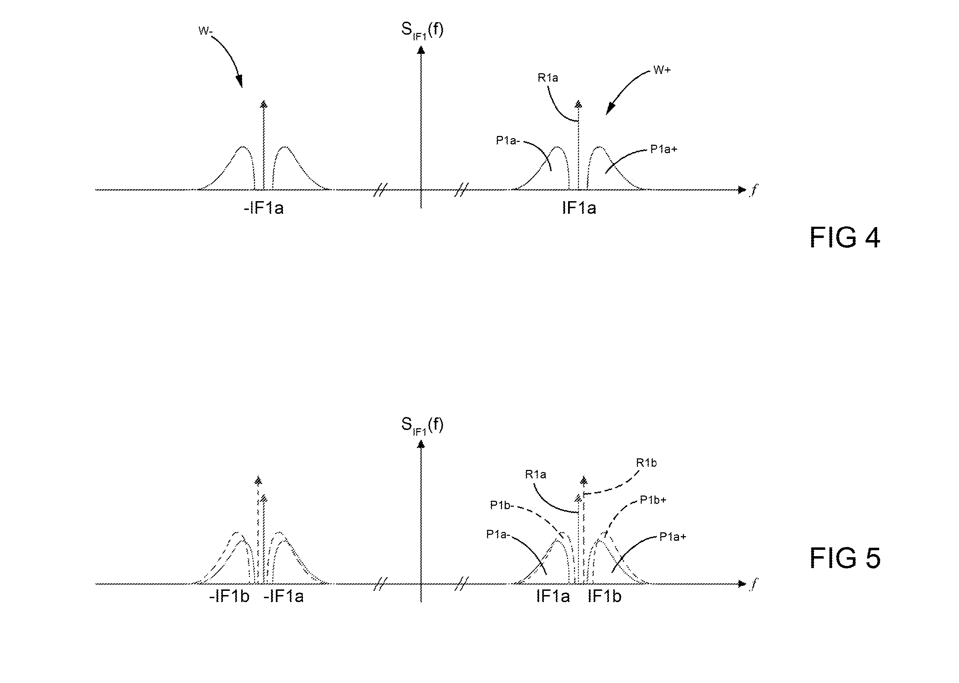

If the global signal $s_{in}(t)$ is formed only by a first signal $s_1(t)$, which is amplitude-modulated and hence has a first carrier, the spectrum of the intermediate signal $s_{IF1}(t)$ is of the type shown in Figure 4.

In detail, the spectrum of the intermediate signal $s_{IF1}(t)$ comprises, in the positive frequency half-plane, a first line R1a at a first-line first frequency IF1a. In addition, once again with reference to the positive frequency half-plane, to which implicit reference is made in the present document, except where otherwise specified, the spectrum of the intermediate signal $s_{IF1}(t)$ comprises a first side portion P1a- and a second side portion P1a+, respectively to the right and to the left (in frequency) of the first line R1a, with respect to which they are specular. In addition, the first and second side portions P1a-, P1a+ are to a first approximation negligible at the first line R1a, at least in the case of audio applications.

In greater detail, assuming that the first carrier is generated by a first transmission oscillator, which operates at a first nominal frequency and is received by the electronic receiver 20 with a first effective frequency, and moreover assuming, without this implying any loss of generality, that the local oscillator is ideal and operates at a local frequency, the first-line first frequency IF1a is equal to the difference between the first effective frequency and the local frequency. By way of example, in what follows it is assumed that the first-line first frequency IF1a is approximately equal to 455 kHz. It should be noted that the adverb "approximately" is here used to indicate that the first-line first frequency IF1a would be equal to 455 kHz in the absence of the Doppler effect and of non-idealities (offsets and drifts) of the first transmission oscillator, i.e., if the first transmission oscillator were to generate the first carrier with a frequency exactly equal to the first nominal frequency. The adverb "approximately" is used in the same way in the sequel of the present document.

In the case where, instead, the global signal $s_{in}(t)$ at input to the electronic receiver 20 is formed, not only by the first signal $s_1(t)$, but also by a second signal $s_2(t)$, which is also amplitude-modulated and has a second carrier, the spectrum of the intermediate signal $s_{IF1}(t)$ is of the type shown in Figure 5.

In greater detail, assuming that the second carrier is generated by a second transmission oscillator, which also operates at the first nominal frequency and is received by the electronic receiver 20 with a second effective frequency, the spectrum of the intermediate signal $s_{IF1}(t)$ has a second line R1b to a second-line first frequency IF1b, and moreover a third side portion P1b- and a fourth side portion P1b+. In particular, the third and fourth side portions P1b-, P1b+ are arranged specular with respect to the second line R1b. In addition, the third and fourth side portions P1b-, P1b+ are to a first approximation negligible at the second line R1b, at least in the case of audio applications.

In particular, also the second-line first frequency IF1b is approximately equal to 455 kHz; however, in the case where the first and second transmission oscillators are different and/or are in different relative motions with respect to the electronic receiver 20, a deviation is inevitably present between the first-line first frequency IF1a and the second-line first frequency IF1b. Said deviation can be explained by the fact that the second transmission oscillator is affected by offsets and drifts different from offsets and drifts of the first transmission oscillator, and/or by the fact that the Doppler effect manifests itself to a different extent on the first signal $s_1(t)$ and on the second signal $s_2(t)$.

In the case where the global signal $s_{in}(t)$ comprises further amplitude-modulated signals that have carriers generated by further transmission oscillators operating at the first nominal frequency, the spectrum of the intermediate signal $s_{IF1}(t)$ changes accordingly, with the addition of further lines and further side portions.

Next, the analog-to-digital converter 28 samples the intermediate signal $s_{IF1}(t)$ at a first sampling frequency $f_{s1}$, generating a stream of first samples $S_{IF1}(n)$. The first sampling frequency $f_{s1}$ is chosen as a function of the global signal $s_{in}(t)$ and of the local frequency of the local oscillator 30, in such a way as to respect the Nyquist criterion. With reference to the case provided by way of example where the first-line first frequency IF1a and the second-line first frequency IF1b are approximately equal to 455 kHz, the first sampling frequency $f_{s1}$ may be equal to, for example, 1 MHz.

The electronic receiver 20 further comprises a first digital conversion stage 38, which is connected to the analog-to-digital converter 28 in such a way as to receive the first samples $S_{IF1}(n)$.

On the basis of the first samples $S_{IF1}(n)$, the first digital conversion stage 38 generates a stream of second samples $S_{IF2}(n)$, obtained by decimating the first samples $S_{IF1}(n)$ with a first decimation factor, for example equal to fifty. The second samples $S_{IF2}(n)$ hence have a second sampling frequency $f_{s2}$, and their spectrum is periodic with period $f_{s2}$.

In a way in itself known, in generating the stream of second samples $S_{IF2}(n)$, the first digital conversion stage 38 may carry out operations of filtering and multiplication by $(-1)^n$, or else other operations known in the field of signals analysis, and in particular in the context of frequency subconversion, in order to select a desired part of the spectrum of the intermediate signal $s_{IF1}(t)$.

With reference, by way of example, to the spectrum of the intermediate signal $s_{IF1}(t)$ shown in Figure 4, and with reference to a positive portion W+ to indicate the part of spectrum formed by the first line R1a and by the first and second side portions P1a-, P1a+, and with reference to a negative portion W- to indicate the portion of spectrum specular to the positive portion W+ with respect to the zero frequency, the first digital conversion stage 38 operates in such a way that the spectrum of the second samples $S_{IF2}(n)$ is formed, in the positive frequency half-plane, by the positive portion W+, translated to a frequency that is lower than the first-line first frequency IF1a. The fact that this result is obtained by means of translation in frequency of the portion W+, or else as translation and flipping in frequency (for example, by means of multiplication by $(-1)^n$ of the first samples $S_{IF1}(n)$) of the negative portion W-, or again with other operations in themselves known, is not relevant for the purposes of the present invention.

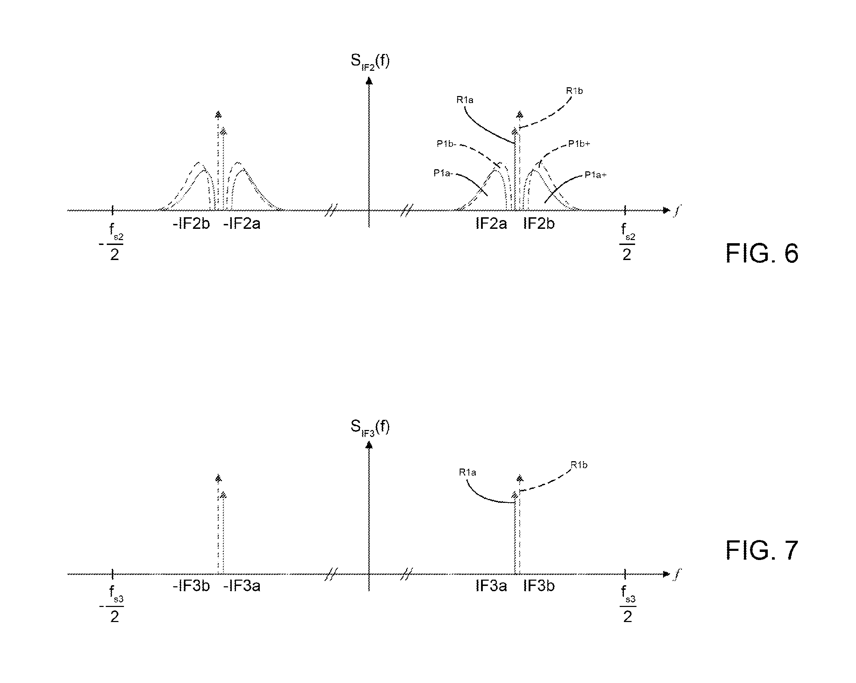

By way of example, with reference to the case where $f_{s1}$=1 MHz and the first decimation factor is equal to fifty, the second sampling frequency $f_{s2}$ is equal to 20 kHz. It follows that, assuming, for example, that the global signal $s_{in}(t)$ is formed by the first and second signals $s_1(t)$, $s_2(t)$, and that the first-line first frequency IF1a and the second-line first frequency IF1b are approximately equal to a first operating frequency $f_{c1}$ of 455 kHz, the second samples $S_{IF2}(n)$ may present the spectrum shown in Figure 6. In particular, the spectrum of the second samples $S_{IF2}(n)$ is equal to the spectrum of the first samples $S_{IF1}(n)$, but translated in frequency in such a way that the first and second lines R1a, R1b are, respectively, at a first-line second frequency IF2a and at a second-line second frequency IF2b, which are approximately equal to a second operating frequency $f_{c2}$ of 5 kHz. In addition, the distances in frequency between the first and second side portions P1a-, P1a+ and the first line R1a, and the third and fourth side portions P1b-, P1b+ and the second line R1b remain unaltered as compared to what is shown in Figure 5.

Once again with reference to the electronic receiver 20, it further comprises a first succession and a second succession of processing blocks, designated, respectively, by 40 and 42, both connected to the first digital conversion stage 38 in such a way as to receive the second samples $S_{IF2}(n)$.

In detail, the first succession of processing blocks 40 comprises a numeric bandpass filter 44, connected to the first digital conversion stage 38, centred about a central frequency and with a filtering bandwidth. The numeric bandpass filter 44 may be of the linear-phase type.

With reference to the example described and shown in Figure 6, the central frequency may be set at 5 kHz, i.e., at the value of frequency at which the first and second lines R1a, R1b of the spectrum of the second samples $S_{IF2}(n)$ would ideally be in the absence of offsets, drifts, and Doppler effect. The filtering bandwidth can be determined as a function of the modulating signals that are expected to be used for modulating the global signal $s_{in}(t)$ in such a way that the numeric bandpass filter 44 filters the side portions, but not the lines. For example, in the case of audio applications, the filtering bandwidth may be set at 700 Hz.

Operatively, the numeric band-pass filter 44 generates, starting from the second samples $S_{IF2}(n)$, a stream of third samples $S_{IF2, C}(n)$, which have once again the second sampling frequency $f_{s2}$.

The first succession of processing blocks 40 then comprises a second digital conversion stage 46, which is connected to the numeric bandpass filter 44 and generates, starting from the third samples $S_{IF2, C}(n)$, a stream of fourth samples $S_{IF3, C}(n)$.

Operatively, the second digital conversion stage 46 decimates the third samples $S_{IF2, C}(n)$ with a second decimation factor. The fourth samples $S_{IF3, C}(n)$ hence have a third sampling frequency $f_{s3}$. In addition, in a way similar to what has been described as regards the first digital conversion stage 38, also the second digital conversion stage 46 may carry out operations of filtering and multiplication by $(-1)^n$ or else other operations known in the field of signals analysis, and in particular in the context of frequency subconversion.

The spectrum of the fourth samples $S_{IF3, C}(n)$ has a number of lines that depends upon the number of amplitude-modulated signals present in the global signal $s_{in}(t)$. For example, in the case where both the first signal $s_1(t)$ and the second signal $s_2(t)$ are present, the spectrum of the fourth samples $S_{IF3, C}(n)$ presents the first and second lines R1a, R1b, which are at a first-line third frequency IF3a and at a second-line third frequency IF3b, respectively, as shown in Figure 7.

For example, assuming that the second decimation factor is equal to twenty, and with reference once again to the case where $f_{s2}=20$ kHz, $f_{s3}$ may be set at 1 kHz; if the first-line second frequency IF2a and the second-line second frequency IF2b are approximately equal (for example) to 5 kHz, it is possible for the first-line third frequency IF3a and the second-line third frequency IF3b to be approximately equal to a third operating frequency $f_{c3}$ of 250 Hz.

The first succession of processing blocks 40 then comprises an estimator stage 48, which is connected to the second digital conversion stage 46 and receives at input the fourth samples $S_{IF3, C}(n)$.

In detail, the estimator stage 48 waits to receive a first block of samples formed by a number M of fourth samples $S_{IF3, C}(n)$, and then processes, as described hereinafter, this first block of samples. Next, the estimator stage 48 iterates the operations described, and in particular waits to receive a further block of samples, and so forth.

In detail, in regard to the first block of samples, the estimator stage 48 implements a sinusoidal-estimation algorithm, such as, for example, a modified version of the Prony method known as energy-spectral-density (ESD) estimation, which is described, for example, in L. Marple, "Spectral line analysis by Pisarenko and Prony methods", in IEEE International Conference on Acoustics, Speech, and Signal Processing (ICASSP) '79, April 1979, vol. 4, pp. 159-161, or else in J.F. Hauer, C.J. Demeure, L.L. Scharf, "Initial results in Prony analysis of power system response signals", IEEE Transactions on Power Systems, vol. 5, No. 1, pp. 80-89, February 1990.

For practical purposes, the estimator stage 48 determines, on the basis of the first block of samples, a number P of sinusoids. The number P of sinusoids is equal to the number of carriers present in the global signal $s_{in}(t)$, since each sinusoid corresponds to a carrier of the global signal $s_{in}(t)$. For example, in the case where the global signal $s_{in}(t)$ is formed by the first and second signals $s_1(t)$, $s_2(t)$, the number P of sinusoids is equal to two.

The estimator stage 48 moreover determines, for each sinusoid, and hence for each carrier present in the global signal $s_{in}(t)$, a respective set of three parameters, each set of three comprising an estimated amplitude, an estimated frequency, and an estimated phase for the respective sinusoid. In particular, the estimated frequencies supplied by the estimator stage 48 are expressed as corresponding differences (offsets) with respect to the third operating frequency $f_{c3}$.

The sets of three parameters determined by the estimator stage 48 are then supplied to the second succession of processing blocks 42, as described hereinafter.

In particular, the second succession of processing blocks 42 comprises a delaying stage 50, which is connected to the first digital conversion stage 38, and delays the second samples $S_{IF2}(n)$. In greater detail, the delaying stage 50 delays the second samples $S_{IF2}(n)$ by an amount equal to the processing time of the first succession of blocks 40, understood as sum of the delays introduced by the numeric bandpass filter 44, by the second digital conversion stage 46, and by the estimator stage 48.

The second succession of processing blocks 42 further comprises an eliminating stage 52, which receives at input the second samples $S_{IF2}(n)$, as delayed by the delaying stage 50.

In greater detail, the eliminating stage 52 receives at input also the sets of three parameters determined by the estimator stage 48. In addition, the eliminating stage 52 generates a stream of fifth samples $S_{IF2, NC}(n)$, obtained by carrying out the operation

$$S_{IF2,NC}(n) = S_{IF2}(n) - \sum_{j=1}^{P} A_{rj} \cdot \cos\left(2\pi\left(f_{c2} + f_{rj}\right) \cdot nT_{s2} + \varphi_{rj}\right) \qquad (1)$$

where an index j is used to identify the P sinusoids determined by the estimator stage 48, where $T_{s2}=1/f_{s2}$, and where $A_{rj}$, $f_{rj}$ and $\varphi_{rj}$ are, respectively, the estimated amplitude, the estimated frequency, and the estimated phase for the j-th sinusoid, as determined by the estimator stage 48. In addition, the argument of the cosine comprises a frequency offset equal to the second operating frequency $f_{c2}$, since, as has been mentioned, the spectrum of the second samples $S_{IF2}(n)$ is translated in frequency to the second operating frequency $f_{c2}$.

Operatively, the eliminating stage 52 eliminates from the second samples $S_{IF2}(n)$ (delayed by the delaying stage 50) the contributions due to the carriers, which, as is known, do not convey information on the modulating signals; these contributions due to the carriers could cause interference in the subsequent processing steps. For practical purposes, subtracted from each considered sample of the second samples $S_{IF2}(n)$ is a respective quantity given by the following equation:

$$\sum_{j=1}^{P} A_{rj} \cdot \cos\left(2\pi\left(f_{c2} + f_{rj}\right) \cdot nT_{s2} + \varphi_{rj}\right) \qquad (2)$$

i.e., a quantity equal to the sum of P samples that correspond to the determined sinusoids. In addition, unlike what occurs in numeric filters, the eliminating stage 52 does not envisage the presence of any delayer and hence does not introduce any delay nor any phase distortion in the second samples $S_{IF2}(n)$.

It should be noted that the presence of the delaying stage 50 enables the eliminating stage 52 to execute the operation represented by Eq. (1) in such a way that each of the fifth samples $S_{IF2, NC}(n)$ is processed on the basis of information (the sets of three parameters) determined by the estimator stage 48 also on the basis of the sample $S_{IF2, Nc}(n)$ itself.

The fifth samples $S_{IF2, NC}(n)$ are then supplied to a third digital conversion stage 54, which forms part of the second succession of processing blocks 42 and is connected, not only to the eliminating stage 52, but also to the estimator stage 48.

In detail, the third digital conversion stage 54 is formed by a selection stage 56, a digital mixer 58, a lowpass numeric filter 60, and a decimator 62.

In greater detail, the selection stage 56 is connected to the estimator stage 48 and operates in such a way as to select, for each block of samples, the set of three parameters having the maximum estimated amplitude from among the sets of three parameters determined by the estimator stage 48, which will be referred to hereinafter as "reference set of three". At a terminological level, in what follows reference will be made to "reference amplitude $A_{rmax}$", "reference frequency $f_{rmax}$", and "reference phase $\varphi_{rmax}$" to indicate the estimated amplitude, the estimated frequency, and the estimated phase of the reference set of three.

The digital mixer 58 is connected to the eliminating stage 52 and to the selection stage 56. In detail, the digital mixer 58 generates sixth samples $S_{IF2, D+S}(n)$ starting from the fifth samples $S_{IF2, NC}(n)$, by performing the operation

$$S_{IF2,D+S}(n) = S_{IF2,NC}(n) \cdot A_{r\max} \cdot \cos\left(2\pi\left(f_{c2} + f_{r\max}\right) \cdot nT_{s2} + \varphi_{r\max}\right) \qquad (3)$$

where it is in any case possible to use, instead of the reference amplitude $A_{rmax}$, any desired amplitude. As regards the presence, in the argument of the cosine, of a frequency offset equal to the second operating frequency $f_{c2}$ the considerations expressed in connection with Eq. (1) apply.

The operation described by Eq. (3) means that the spectrum of the sixth samples $S_{IF2, D+s}(n)$ present a sum component and a difference component, which have the same shape of the spectrum of the fifth samples $S_{IF2, NC}(n)$ (not shown) and are at a distance in frequency $2*f_{rmax}$.

The lowpass numeric filter 60 is connected to the digital mixer 58 in such a way as to receive the sixth samples $S_{IF2, D+S}(n)$, filter them and generate a stream of seventh samples $S''_{BB}(n)$. In particular, the lowpass numeric filter 60 has a cut-off frequency such as to eliminate the aforementioned sum component, but not the difference component. Purely by way of example, the cut-off frequency of the lowpass numeric filter 60 may be comprised between 4 kHz and 6 kHz.

As regards, instead, the decimator 62, it decimates the seventh samples $S''_{BB}(n)$ with a third decimation factor, for example fractionary and equal to 5/2, to generate a stream of eighth samples $S'_{BB}(n)$ at a fourth sampling frequency $f_{s4}$.

In general, the presence of the decimator 62 is optional, it being possible for the operations that are described hereinafter to be carried out directly on the seventh samples $S''_{BB}(n)$ at the second sampling frequency $f_{s2}$. However, in what follows reference is made, without this implying any loss of generality, to the case where the third digital conversion stage 54 comprises the decimator 62.

Operatively, the third digital conversion stage 54 carries out a conversion into baseband of the fifth samples $S_{IF2, NC}(n)$, this conversion being of a coherent type and being based upon the carrier having maximum amplitude from amongst the carriers present in the global signal $s_{in}(t)$, hence on the carrier that is characterized by the best signal-to-noise ratio.

Downstream of the third digital conversion stage 54, the second succession of processing blocks 42 comprises an interference-suppression stage 64, which is connected not only to the third digital conversion stage 54, but also to the estimator stage 48. In particular, the interference-suppression stage 64 is connected not only to the estimator stage 48, but also to the selection stage 56 and to the decimator 62 of the third digital conversion stage 54.

The interference-suppression stage 64 performs the function of demodulating the modulating signals present in the global signal $s_{in}(t)$. In particular, in the case where the global signal $s_{in}(t)$ contains just the first signal $s_1(t)$, modulated for example by a modulating signal u(t), the interference-suppression stage 64 supplies the modulating signal u(t). In addition, in the case where the global signal $s_{in}(t)$ contains P signals amplitude-modulated on carriers having one and the same nominal frequency, and modulated by signals of the type $A_i*u(t-\tau_i)$ (with i=1, ..., P), i.e., by signals that correspond, but for the different amplitudes, to delayed versions of the modulating signal u(t), the interference-suppression stage 64 supplies the modulating signal u(t).

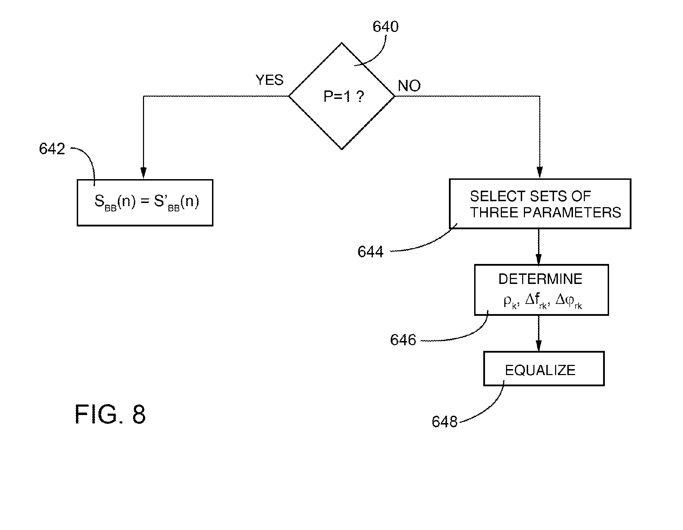

In detail, the interference-suppression stage 64 carries out on the eighth samples $S'_{BB}(n)$ the operations shown in Figure 8, generating a stream of ninth samples $S_{BB}(n)$.

In particular, the interference-suppression stage 64 verifies (block 640) whether the number P of sinusoids determined by the estimator stage 48 is equal to one, in which case (output YES from block 640), the ninth samples $S_{BB}(n)$ are set equal to the eighth samples $S'_{BB}(n)$ (block 642).

In the case where the number P of sinusoids is greater than one (output NO from block 640), the interference-suppression stage 64 carries out a digital processing of the eighth samples $S'_{BB}(n)$, for example an equalization in the time domain, it being possible for this equalization to be carried out according to any of the techniques known in the literature, such as, for example, amplitude-equalization techniques of a "zero forcing" type, or else techniques of statistical demodulation of analog signals. Alternatively, the interference-suppression stage 64 may resort to the so-called technique of a minimum-mean-square-error (MMSE) type, or else to techniques based upon the use of Kalman filters. By way of example, the operations shown in Figure 8 and described herein refer to the case where the equalization in the time domain is carried out by implementing the so-called simple-amplitude-compensation technique (also referred to as "zero forcing" technique), i.e., by dividing each of the eighth samples $S'_{BB}(n)$ by a respective equalization factor.

In particular, the interference-suppression stage 64 selects (block 644), from among the P sets of three parameters supplied by the estimator stage 48, each set of three parameters, with the exclusion of the reference set of three. Next, for each set of three parameters selected, the interference-suppression stage 64 determines (block 646) the quantities $\rho_k$, $\Delta f_{rk}$, and $\Delta\varphi_{rk}$, where k is the index of the sets of three parameters selected, and hence ranges from 1 to P-1. In particular, $\rho_k$ is equal to the ratio between the estimated amplitude of the selected set of three and the estimated amplitude of the reference set of three; $\Delta f_{rk}$ is the difference between the estimated frequency of the selected set of three and the estimated frequency of the reference set of three; and finally $\Delta\varphi_{rk}$ is the difference between the estimated phase of the selected set of three and the estimated phase of the reference set of three.

Next, the interference-suppression stage 64 carries out (block 648) an operation of equalization, as follows:

$$S_{BB}(n) = \frac{S'_{BB}(n)}{1 + \sum_{k=1}^{P-1} \rho_k \cdot \cos(2\pi\Delta f_{rk} \cdot nT_{s4} + \Delta\varphi_{rk})} \quad (4)$$

where $T_{s4}$ is the inverse of the fourth sampling frequency $f_{s4}$. The ninth samples $S_{BB}(n)$ can then be sent to further processing stages, which are in themselves known and are external to the electronic receiver 20.

In any case, if a) the global signal $s_{in}(t)$ contains just the first signal $s_1(t)$, modulated by the modulating signal u(t), or else if b) the global signal $s_{in}(t)$ comprises P signals, which are amplitude-modulated by signals of the type $A_i*u(t-\tau_i)$ (with i=1, ..., P) and the carriers of which have one and the same nominal frequency, the ninth samples $S_{BB}(n)$ obtained at the end of the operations referred to in blocks 642 or 648 are samples of the modulating signal u(t).

In other words, also in the case b), i.e., also in the case where the global signal $s_{in}(t)$ comprises a number of signals which overlap in time and the carriers of which have effective frequencies that differ by not more than a few hundreds of Hertz, the interference-suppression stage 64 is in any case able to extract the modulating signal u(t) starting from the eighth samples $S'_{BB}(n)$, i.e., starting from a baseband digital signal without the contributions due to the carriers. In fact, the interference-suppression stage 64 is able to extract the modulating signal u(t) even in the presence of signals overlapping in time and frequency, where by "signals overlapping in time" is meant signals the time domains of which overlap by at least 50%, whilst by "signals overlapping in frequency" is meant signals the spectra of which extend on bands overlapping by at least 50%.

In practice, typically the interference-suppression stage 64 operates with P=2, since, for practical purposes, a situation where a third carrier is present with estimated amplitude decidedly lower (at least 6 dB) than the estimated amplitudes of a first carrier and a second carrier can be equated with a situation with just two carriers.

This situation arises, for example, when two contiguous control stations transmit one and the same voice signal, for example constituted by the voice of a flight controller who is in a control centre, which can be located at different distances from the two control stations. In this case, the transmission of the voice signal (appropriately converted into electromagnetic signal) by the control centre at the two control stations can occur so as to equalize the delays due to the different distances that separate the control centre from the two control stations. Consequently, the first and second signals $s_1(t)$, $s_2(t)$ of the global signal $s_{in}(t)$ are amplitude-modulated respectively by a signal $A_1{}^*u(t-\tau_1)$ and by a signal $A_2{}^*u(t-\tau_2)$, where $u(t)$ is precisely the voice signal, and $\tau_1$ and $\tau_2$ depend upon the distances of the two control stations from the electronic receiver 20. In addition, it is possible for the two control stations to transmit the voice signal on one and the same communication channel in such a way that the carriers of the first and second signals $s_1(t)$, $s_2(t)$ have one and the same nominal frequency. The electronic receiver 20 enables in any case demodulation of $u(t)$, i.e., the voice signal.

The advantages that the electronic receiver 20 affords emerge clearly from the foregoing description. In particular, the electronic receiver 20 enables effective demodulation of amplitude-modulated signals, also in the case where a number of signals are received, generated by different oscillators that operate at one and the same nominal frequency.

By way of example, the electronic receiver 20 finds advantageous, though not exclusive, use in the field of avionic systems. In fact, as shown schematically in Figure 9, it is possible to provide a ground network 70 formed by at least one first control station 72a and one second control station 72b, which present, respectively, a first area of coverage and a second area of coverage, designated by 74a and 74b, which overlap. In addition, both the first and second control stations 72a, 72b can resort to one and the same communication channel for transmitting amplitude-modulated signals to aeroplanes that fly over the respective areas of coverage 74a, 74b. In other words, assuming that the first and second control stations 72a, 72b generate their own control signals by means of respective oscillators, said oscillators can operate, in one and the same instant of time, at one and the same nominal frequency, without any degradation of the communications with a possible aeroplane that is located in a position corresponding to a region 74c in which the first and second areas of coverage 74a, 74b overlap, provided that the aeroplane is equipped with the electronic receiver 20 described.

In greater detail, assuming that the first and second control stations 72a and 72b transmit, respectively, a first control signal and a second control signal, both of which are amplitude-modulated, the electronic receiver 20 operates in such a way as to extract the information associated to the control signal the carrier of which has a greater amplitude at the electronic receiver 20 itself. A similar benefit is obtained in the case of more than two control stations.

Consequently, it is now possible to use one and the same communication channel for two or more contiguous control stations, without any need to tune the electronic receivers with which the aeroplanes are equipped at each change of area of coverage, and without the pilots perceiving any degradation of the communications with the flight controllers in the areas of overlapping between different areas of coverage. In addition, it is possible for a single flight controller to communicate with an aeroplane on one and the same communication channel for the entire duration of the flight of the aeroplane itself, irrespective of the areas of coverage traversed by the aeroplane.

It should be moreover noted that the behaviour of the electronic receiver 20 does not change in the case where the simplifying hypothesis of ideal local oscillator 30 is removed, since any possible non-idealities of the local oscillator 30, or else of the electronic conditioning circuit 26, are treated as if they were non-idealities of the transmission oscillators, i.e., non-idealities common to the signals that form the global signal $s_{in}(t)$. Consequently, these non-idealities do not adversely affect the ninth samples $S_{BB}(n)$.

Finally, it is clear that modifications and variations may be made to the electronic receiver 20 described herein, without thereby departing from the scope of the present invention, as defined by the annexed claims.

In particular, the estimator stage 48 can resort to a technique of sinusoidal estimation different from the energy-spectral-density (ESD) estimation according to the Prony method. By way of example, the estimator stage 48 can implement the Pisarenko method, described, for example, in V.F. Pisarenko, "The retrieval of Harmonics from a Covariance Function", Geophysical Journal of the Royal Astronomical Society, vol. 33, No. 3, pp. 347-366, 1973. The estimator stage 48 can likewise implement the so-called multiple-signal-classification (MUSIC) method, as described for example in M.H. Hayes, Statistical Digital Signal Processing and Modeling, John Wiley & Sons, Inc., 1996, or else in R.O. Schmidt, "Multiple Emitter Location and Signal Parameter Estimation", IEEE Transactions on Antennas and Propagation, vol. 34, No. 3, pp. 276-280, March 1986. In addition, further techniques that can be implemented by the estimator stage 48 are the so-called least-mean-square (LMS) technique, the recursive-least-square (RLS) technique, or else statistical recursive filtering techniques such as the Kalman filter or the so-called "particle filter", said techniques being described, for example, in H. Hayes, Statistical Digital Signal Processing and Modeling, John Wiley & Sons Inc., 1996 cited above.

Further embodiments of the present electronic receiver 20 may not include the second digital-conversion stage 46, since the estimator stage 48 can work also at the second sampling frequency $f_{s2}$, even though the presence of the second digital-conversion stage 46 enables optimization of operation of the estimator stage 48. In fact, by decreasing the sampling frequency of the samples supplied to the estimator stage 48, the computational complexity of the estimator stage 48 itself is reduced, the latter moreover operating with a higher degree of effectiveness. In fact, assuming for example that the number of carriers present in the global signal $s_{in}(t)$ is equal to two, given the same difference of effective frequency between the two carriers, the estimator stage 48 discriminates the two carriers all the better the lower the sampling frequency of the samples supplied to the estimator stage 48 itself.

**Claims**

1.  An electronic receiver for amplitude-modulated signals, comprising:

    - sampling means (22, 26, 28, 38), configured for receiving an input signal ($s_{in}(t)$) including one or more elementary signals ($s_1(t)$, $s_2(t)$) amplitude-modulated starting from one and the same modulating signal ($u(t)$) and partially overlapping in time and in frequency, and for generating a plurality of input samples ($S_{IF2}(n)$) starting from the input signal ($s_{in}(t)$) ;
    - filtering means (44, 46), configured for filtering the input samples ($S_{IF2}(n)$) and generating a plurality of samples to be estimated ($S_{IF3, C}(n)$) ; and
    - estimator means (48), connected to the filtering means (44, 46) and configured for determining a number (P) of sinusoidal functions on the basis of the samples to be estimated ($S_{IF3, C}(n)$), and for determining, for each sinusoidal function, a corresponding set of parameters;
    - carrier-eliminating means (52), connected to the sampling means and to the estimator means and configured for generating a plurality of processed samples ($S_{IF2, NC}(n)$) on the basis of the input samples ($S_{IF2}(n)$) and of the sets of parameters; and
    - translating means (54), connected to the estimator means and to the carrier-eliminating means and configured for generating a plurality of samples converted into baseband ($S'_{BB}(n)$) on the basis of the processed samples ($S_{IF2, NC}(n)$) and of at least one from among the sets of parameters;

    **characterized in that** it further comprises interference-suppressing means (64), connected to the translating means and to the estimator means and configured for generating a plurality of equalized samples ($S_{BB}(n)$) on the basis of the samples converted into baseband ($S'_{BB}(n)$) and of the sets of parameters, and wherein each set of parameters comprises a respective estimated amplitude, a respective estimated frequency, and a respective estimated phase, and wherein the carrier-eliminating means (52) are configured for subtracting from each input sample ($S_{IF2}(n)$) a corresponding first quantity obtained by adding a number of contributions equal to the number (P) of sinusoidal functions, each contribution being a function of the estimated amplitude, of the estimated frequency, and of the estimated phase of a respective set of parameters.

2.  The electronic receiver according to claim 1, wherein the interference-suppressing means (64) are configured for demodulating the modulating signal ($u(t)$).

3.  The electronic receiver according to claim 1 or 2, further comprising first selector means (56), connected to the estimator means (48) and configured for selecting a reference set, said reference set being the set of parameters having maximum estimated amplitude.

4.  The electronic receiver according to claim 3, wherein the interference-suppressing means (64) comprise:

    - verification means (640), configured for verifying whether the number (P) of sinusoidal functions is greater than one;
    - second selector means (644), configured for selecting, in the case where the number (P) of sinusoidal functions is greater than one, each set of parameters, with the exclusion of the reference set; and
    - first computing means (646), configured for determining, for each selected set of parameters, a respective quantity $\rho_k$, indicating the ratio between the estimated amplitude of the selected set of parameters and the estimated amplitude of the reference set, a respective quantity $\Delta f_{rk}$, indicating the difference between the estimated frequency of the selected set of parameters and the estimated frequency of the reference set, and a respective quantity $\Delta\varphi_{rk}$, indicating the difference between the estimated phase of the selected set of parameters and the estimated phase of the reference set.

5.  The electronic receiver according to claim 4, wherein the interference-suppressing means (64) further comprise second computing means (648), configured for generating the equalized samples ($S_{BB}(n)$) on the basis of the samples converted into baseband ($S'_{BB}(n)$) and of the determined quantities $\rho_k$, $\Delta f_{rk}$ and $\Delta\varphi_{rk}$ determined.

6.  The electronic receiver according to any one of claims 3 to 5, wherein said translating means (54) comprise:

- multiplying means (58), connected to the carrier-eliminating means (52) and to the first selector means (56) and configured for multiplying each processed sample ($S_{IF2, NC}(n)$) by a corresponding second quantity that is a function of at least one parameter from among the estimated frequency, the estimated amplitude, and the estimated phase of the reference set, to generate a plurality of intermediate samples ($S_{IF2, D+S}(n)$).

7. The electronic receiver according to claim 6, further comprising a lowpass numeric filter (60), configured for filtering the intermediate samples ($S_{IF2, D+S}(n)$).

8. The electronic receiver according to any one of the preceding claims, wherein the estimator means (48) are moreover configured for processing the samples to be estimated ($S_{IF3, C}(n)$) in blocks of samples, each block of samples being formed by a number (M) of samples; said electronic receiver further comprising a delayer (50), arranged between the sampling means (22, 26, 28, 38) and the carrier-eliminating means (52) and configured for delaying the input samples ($S_{IF2}(n)$) as a function of said number (M) of samples.

9. The electronic receiver according to claim 8, wherein the estimator means (48) are moreover configured for carrying out, on said blocks of samples, a sinusoidal-estimation method chosen from among: the energy-spectral-density (ESD) estimation method according to the Prony method, the multiple-signal-classification (MUSIC) method, and the Pisarenko method.

10. The electronic receiver according to any one of the preceding claims, wherein the filtering means (44, 46) comprise a numeric bandpass filter (44).

11. A method for processing amplitude-modulated signals, comprising the steps of:

   - receiving and sampling an input signal ($s_{in}(t)$) including one or more elementary signals ($s_1(t)$, $s_2(t)$) amplitude-modulated starting from one and the same modulating signal ($u(t)$) and partially overlapping in time and in frequency, to generate a plurality of input samples ($S_{IF2}(n)$);
   - filtering the input samples ($S_{IF2}(n)$) to generate a plurality of samples to be estimated ($S_{IF3, C}(n)$);
   - determining a number (P) of sinusoidal functions on the basis of the samples to be estimated ($S_{IF3, C}(n)$); and
   - determining, for each sinusoidal function, a corresponding set of parameters;
   - generating a plurality of processed samples ($S_{IF2, NC}(n)$) on the basis of the input samples ($S_{IF2}(n)$) and of the sets of parameters; and
   - generating a plurality of samples converted into baseband ($S'_{BB}(n)$) on the basis of the processed samples ($S_{IF2, NC}(n)$) and of at least one from among the sets of parameters; **characterized in that** it further comprises the step of generating a plurality of equalized samples ($S_{BB}(n)$) on the basis of the samples converted into baseband ($S'_{BB}(n)$) and of the sets of parameters, and wherein each set of parameters comprises a respective estimated amplitude, a respective estimated frequency, and a respective estimated phase, and wherein said step of generating a plurality of processed samples ($S_{IF2, NC}(n)$) comprises subtracting from each input sample ($S_{IF2}(n)$) a corresponding first quantity obtained by adding a number of contributions equal to the number (P) of sinusoidal functions, each contribution being a function of the estimated amplitude, of the estimated frequency, and of the estimated phase of a respective set of parameters.

12. The processing method according to claim 11, wherein said step of generating a plurality of equalized samples ($S_{BB}(n)$) comprises demodulating said modulating signal ($u(t)$).

13. The processing method according to claim 11 or 12, further comprising the step of selecting a reference set, said reference set being the set of parameters having maximum estimated amplitude.

14. The processing method according to claim 13, wherein said step of generating a plurality of equalized samples ($S_{BB}(n)$) comprises the steps of:

   - verifying whether the number (P) of sinusoidal functions is greater than one;
   - selecting, in the case where the number (P) of sinusoidal functions is greater than one, each set of parameters, with the exclusion of the reference set; and
   - determining, for each selected set of parameters, a respective quantity $\rho_k$, indicating the ratio between the estimated amplitude of the selected set of parameters and the estimated amplitude of the reference set, a respective quantity $\Delta f_{rk}$, indicating the difference between the estimated frequency of the selected set of parameters and the estimated frequency of the reference set, and a respective quantity $\Delta\varphi_{rk}$, indicating the differ-

ence between the estimated phase of the selected set of parameters and the estimated phase of the reference set.

15. The processing method according to claim 14, wherein said step of generating a plurality of equalized samples ($S_{BB}(n)$) further comprises generating the equalized samples ($S_{BB}(n)$) as a function of the samples converted into baseband ($S'_{BB}(n)$) and of the quantities $\rho_k$, $\Delta f_{rk}$ and $\Delta\varphi_{rk}$ determined.

16. The processing method according to any one of claims 13 to 15, wherein said step of generating a plurality of samples converted into baseband ($S'_{BB}(n)$) comprises the step of multiplying each processed sample ($S_{IF2, NC}(n)$) by a corresponding second quantity, which is a function of at least one parameter from among the estimated frequency, the estimated amplitude, and the estimated phase of the reference set, to generate a plurality of intermediate samples ($S_{IF2, D+S}(n)$).

17. The processing method according to any one of claims 11 to 16, wherein said step of determining a number (P) of sinusoidal functions comprises processing the samples to be estimated ($S_{IF3, C}(n)$) in blocks of samples, each block of samples being formed by a number (M) of samples; said method further comprising the step of delaying the input samples ($S_{IF2}(n)$) as a function of said number (M) of samples, before carrying out the step of subtracting from each input sample ($S_{IF2}(n)$) a corresponding first quantity.

18. The processing method according to claim 17, wherein the step of determining a number (P) of sinusoidal functions comprises carrying out, on said blocks of samples, a sinusoidal-estimation method chosen from among: the energy-spectral-density (ESD) estimation method according to the Prony method, the multiple-signal-classification (MUSIC) method, and the Pisarenko method.

19. The processing method according to any one of claims 11 to 18, wherein the step of filtering the input samples ($S_{IF2}(n)$) comprises carrying out a numeric filtering of a bandpass type.

20. A method for communication between an aircraft and a ground network (70) formed by at least a first control station (72a) and a second control station (72b), which have, respectively, a first area of coverage (74a) and a second area of coverage (74b) that partially overlap, comprising the steps of:

- transmitting a first control signal by the first control station (72a), said first control signal being amplitude-modulated on a first carrier at a first nominal frequency;
- transmitting a second control signal by the second control station (72b), said second control signal being amplitude-modulated on a second carrier at the first nominal frequency;
- receiving, by the aircraft, the first and second control signals; and
- carrying out the processing method according to any one of claims 11 to 20.

21. The communication method according to claim 20, wherein the steps of transmitting the first and second control signals comprise amplitude modulating the first and second carriers with one and the same information signal.

**Patentansprüche**

1. Elektronischer Empfänger für amplitudenmodulierte Signale, der umfasst:

- Abtastmittel (22, 26, 28, 38), die konfiguriert sind, ein Eingangssignal ($s_{in}(t)$), das ein oder mehrere elementare Signale ($s_1(t)$, $s_2(t)$) enthält, die beginnend bei ein und demselben Moduliersignal ($u(t)$) amplitudenmoduliert sind und sich teilweise in der Zeit und in der Frequenz überdecken, zu empfangen und mehrere Eingangsabtastungen ($S_{IF2}(n)$) beginnend bei dem Eingangssignal ($s_{in}(t)$) zu erzeugen;
- Filtermittel (44, 46), die konfiguriert sind, die Eingangsabtastungen ($S_{IF2}(n)$) zu filtern und mehrere zu schätzende Abtastungen ($S_{IF3, C}(n)$) zu erzeugen; und
- Schätzmittel (48), die mit den Filtermitteln (44, 46) verbunden sind und konfiguriert sind, eine Anzahl (P) von Sinusfunktionen anhand der zu schätzenden Abtastungen ($S_{IF3, C}(n)$) zu bestimmen und für jede Sinusfunktion eine entsprechende Gruppe von Parametern zu bestimmen;
- Trägerbeseitigungsmittel (52), die mit den Abtastmitteln und den Schätzmitteln verbunden sind und konfiguriert sind, mehrere verarbeitete Abtastungen ($S_{IF2, NC}(n)$) anhand der Eingangsabtastungen ($S_{IF2}(n)$) und der Gruppen von Parametern zu erzeugen; und
- Übersetzungsmittel (54), die mit den Schätzmitteln und den Trägerbeseitigungsmitteln verbunden sind und konfiguriert sind, mehrere in das Basisband umgesetzte Abtastungen ($S'_{BB}(n)$) anhand der verarbeiteten Abtastungen ($S_{IF2, NC}(n)$) und mindestens einer der Gruppen von Parametern zu erzeugen;

**dadurch gekennzeichnet, dass** er ferner Interferenzunterdrückungsmittel (64) umfasst, die mit den Übersetzungsmitteln und den Schätzmitteln verbunden sind und konfiguriert sind, mehrere egalisierte Abtastungen ($S_{BB}(n)$) anhand der in das Basisband umgesetzten Abtastungen ($S'_{BB}(n)$) und der Gruppen von Parametern zu erzeugen und wobei jede Gruppe von Parametern eine entsprechende geschätzte Amplitude, eine entsprechende geschätzte Frequenz und eine entsprechende geschätzte Phase umfasst und wobei die Trägerbeseitigungsmittel (52) konfiguriert sind, von jeder Eingangsabtastung ($S_{IF2}(n)$) eine erste entsprechende Größe, die durch Addieren einer Anzahl von Beiträgen, die gleich der Anzahl (P) der Sinusfunktionen ist, zu subtrahieren, wobei jeder Beitrag eine Funktion der geschätzten Amplitude, der geschätzten Frequenz und der geschätzten Phase einer entsprechenden Gruppe von Parametern ist.

2. Elektronischer Empfänger nach Anspruch 1, wobei die Interferenzunterdrückungsmittel (64) konfiguriert sind, das Moduliersignal ($u(t)$) zu demodulieren.

3. Elektronischer Empfänger nach Anspruch 1 oder 2, der ferner erste Auswahlmittel (56) umfasst, die mit den Schätzmitteln (48) verbunden sind und konfiguriert sind, eine Referenzgruppe auszuwählen, wobei die Referenzgruppe die Gruppe von Parametern mit maximaler geschätzter Amplitude ist.

4. Elektronischer Empfänger nach Anspruch 3, wobei die Interferenzunterdrückungsmittel (64) umfassen:

   - Überprüfungsmittel (640), die konfiguriert sind, zu überprüfen, ob die Anzahl (P) von Sinusfunktionen größer als eins ist;
   - zweite Auswahlmittel (644), die konfiguriert sind, in dem Fall, in dem die Anzahl (P) von Sinusfunktionen größer als eins ist, jede Gruppe von Parametern mit der Ausnahme der Referenzgruppe auszuwählen; und
   - erste Berechnungsmittel (646), die konfiguriert sind, für jede ausgewählte Gruppe von Parametern eine entsprechende Größe $\rho_k$, die das Verhältnis zwischen der geschätzten Amplitude der ausgewählten Gruppe von Parametern und der geschätzten Amplitude der Referenzgruppe angibt, eine entsprechende Größe $\Delta f_{rk}$, die den Unterschied zwischen der geschätzten Frequenz der ausgewählten Gruppe von Parametern und der geschätzten Frequenz der Referenzgruppe angibt, und eine entsprechende Größe $\Delta\varphi_{rk}$, die den Unterschied zwischen der geschätzten Phase der ausgewählten Gruppe von Parametern und der geschätzten Phase der Referenzgruppe angibt, zu bestimmen.

5. Elektronischer Empfänger nach Anspruch 4, wobei die Interferenzunterdrückungsmittel (64) ferner zweite Berechnungsmittel (648) umfassen, die konfiguriert sind, die egalisierten Abtastungen ($S_{BB}(n)$) anhand der in das Basisband umgesetzten Abtastungen ($S'_{BB}(n)$) und der bestimmten Größen $\rho_k$, $\Delta f_{rk}$ und $\Delta\varphi_{rk}$ zu erzeugen.

6. Elektronischer Empfänger nach einem der Ansprüche 3 bis 5, wobei die Übersetzungsmittel (54) umfassen:

   - Multipliziermittel (58), die mit den Trägerbeseitigungsmitteln (52) und den ersten Auswahlmitteln (56) verbunden sind und konfiguriert sind, jede verarbeitete Abtastung ($S_{IF2, NC}(n)$) mit einer entsprechenden zweiten Größe zu multiplizieren, die eine Funktion mindestens eines Parameters der geschätzten Frequenz, der geschätzten Amplitude und der geschätzten Phase der Referenzgruppe ist, und mehrere Zwischenabtastungen ($S_{IF2, D+S}(n)$) zu erzeugen.

7. Elektronischer Empfänger nach Anspruch 6, der ferner ein numerisches Tiefpassfilter (60) umfasst, das konfiguriert ist, die Zwischenabtastungen ($S_{IF2, D+S}(n)$) zu filtern.

8. Elektronischer Empfänger nach einem der vorhergehenden Ansprüche, wobei die Schätzmittel (48) darüber hinaus konfiguriert sind, die zu schätzenden Abtastungen ($S_{IF3, c}(n)$) in Blöcken von Abtastungen zu verarbeiten, wobei jeder Block von Abtastungen durch eine Anzahl (M) von Abtastungen gebildet wird; wobei der elektronische Empfänger ferner einen Verzögerer (50) umfasst, der zwischen den Abtastmitteln (22, 26, 28, 38) und den Trägerbeseitigungsmitteln (52) angeordnet ist und konfiguriert ist, die Eingangsabtastungen ($S_{IF2}(n)$) als eine Funktion der Anzahl (M) von Abtastungen zu verzögern.

9. Elektronischer Empfänger nach Anspruch 8, wobei die Schätzmittel (48) darüber hinaus konfiguriert sind, an den Blöcken von Abtastungen ein Sinusschätzverfahren auszuführen, das ausgewählt ist aus: dem Schätzverfahren der spektralen Energiedichte (ESD), dem Multiple-Signal-Classification-Verfahren (MUSIC) und dem Pisarenko-Verfahren.

**10.** Elektronische Empfänger nach einem der vorhergehenden Ansprüche, wobei die Filtermittel (44, 46) ein numerisches Bandpassfilter (44) umfassen.

**11.** Verfahren zum Verarbeiten von amplitudenmodulierten Signalen, das die Schritte umfasst:

- Empfangen und Abtasten eines Eingangssignals ($s_{in}(t)$), das eine oder mehrere elementare Signale ($s1(t)$, $s2(t)$) enthält, die beginnend bei ein und demselben Moduliersignal ($u(t)$) amplitudenmoduliert sind und sich teilweise in der Zeit und in der Frequenz überdecken, um mehrere Eingangsabtastungen ($S_{IF2}(n)$) zu erzeugen;
- Filtern der Eingangsabtastungen ($S_{IF2}(n)$), um mehrere zu schätzende Abtastungen ($S_{IF3, c}(n)$) zu erzeugen;
- Bestimmen einer Anzahl (P) von Sinusfunktionen anhand der zu schätzenden Abtastungen ($S_{IF3, c}(n)$); und
- Bestimmen einer entsprechenden Gruppe von Parametern für jede Sinusfunktion;
- Erzeugen von mehreren verarbeiteten Abtastungen ($S_{IF2, NC}(n)$) anhand der Eingangsabtastungen ($S_{IF2}(n)$) und der Gruppen von Parametern; und
- Erzeugen von mehreren in das Basisband umgesetzten Abtastungen ($S'_{BB}(n)$) anhand der verarbeiteten Abtastungen ($S_{IF2, NC}(n)$) und mindestens einer der Gruppen von Parametern;

**dadurch gekennzeichnet, dass** es ferner den Schritt umfasst, mehrere egalisierte Abtastungen ($S'_{BB}(n)$) anhand der in das Basisband umgesetzten Abtastungen ($S'_{BB}(n)$) und der Gruppen von Parametern zu erzeugen und wobei jede Gruppe von Parametern eine entsprechende geschätzte Amplitude, eine entsprechende geschätzte Frequenz und eine entsprechende geschätzte Phase umfasst und wobei der Schritt des Erzeugens der mehreren verarbeiteten Abtastungen ($S_{IF2}(n), _{NC}(n)$) umfasst, von jeder Eingangsabtastung ($S_{IF2}(n)$) eine entsprechende erste Größe, die durch Addieren einer Anzahl von Beiträgen, die gleich der Anzahl (P) der Sinusfunktionen ist, erhalten wurde, zu subtrahieren, wobei jeder Beitrag eine Funktion der geschätzten Amplitude, der geschätzten Frequenz und der geschätzten Phase einer entsprechenden Gruppe von Parametern ist.

**12.** Verarbeitungsverfahren nach Anspruch 11, wobei der Schritt des Erzeugens der mehreren egalisierten Abtastungen ($S_{BB}(n)$) umfasst, das Moduliersignal ($u(t)$) zu demodulieren.

**13.** Verarbeitungsverfahren nach Anspruch 11 oder 12, das ferner den Schritt umfasst, eine Referenzgruppe auszuwählen, wobei die Referenzgruppe die Gruppe von Parametern mit maximaler geschätzter Amplitude ist.

**14.** Verarbeitungsverfahren nach Anspruch 13, wobei der Schritt des Erzeugens der egalisierten Abtastungen ($S_{BB}(n)$) die Schritte umfasst:

- Überprüfen, ob die Anzahl (P) der Sinusfunktionen größer als eins ist;
- Auswählen jeder Gruppe von Parametern, mit der Ausnahme der Referenzgruppe in dem Fall, in dem die Anzahl (P) der Sinusfunktionen größer als eins ist; und
- Bestimmen einer entsprechenden Größe $\rho_k$, die das Verhältnis zwischen der geschätzten Amplitude der ausgewählten Gruppe von Parametern und der geschätzten Amplitude der Referenzgruppe angibt, einer entsprechenden Größe $\Delta f_{rk}$, die den Unterschied zwischen der geschätzten Frequenz der ausgewählten Gruppe von Parametern und der geschätzten Frequenz der Referenzgruppe angibt, und einer entsprechenden Größe $\Delta\varphi_{rk}$, die den Unterschied zwischen der geschätzten Phase der ausgewählten Gruppe von Parametern und der geschätzten Phase der Referenzgruppe angibt, für jede ausgewählte Gruppe von Parametern.

**15.** Verarbeitungsverfahren nach Anspruch 14, wobei der Schritt des Erzeugens der mehreren egalisierten Abtastungen ($S_{BB}(n)$) ferner umfasst, die egalisierten Abtastungen ($S_{BB}(n)$) als eine Funktion der in das Basisband umgesetzten Abtastungen ($S'_{BB}(n)$) und der bestimmten Größen $\rho_k$, $\Delta f_{rk}$ und $\Delta\varphi_{rk}$ zu erzeugen.

**16.** Verarbeitungsverfahren nach einem der Ansprüche 13 bis 15, wobei der Schritt des Erzeugens von mehreren in das Basisband umgesetzten Abtastungen ($S'_{BB}(n)$) den Schritt umfasst, jede verarbeitete Abtastung ($S_{IF2, NC}(n)$) mit einer entsprechenden zweiten Größe zu multiplizieren, die eine Funktion mindestens eines Parameters der geschätzten Frequenz, der geschätzten Amplitude und der geschätzten Phase der Referenzgruppe ist, und mehrere Zwischenabtastungen ($S_{IF2, D+S}(n)$) zu erzeugen.

**17.** Verarbeitungsverfahren nach einem der Ansprüche 11 bis 16, wobei der Schritt des Bestimmens einer Anzahl (P) von Sinusfunktionen umfasst, die zu schätzenden Abtastungen ($S_{IF3,\,c}$(n)) in Blöcken von Abtastungen zu verarbeiten, wobei jeder Block von Abtastungen durch eine Anzahl (M) von Abtastungen gebildet wird; wobei das Verfahren ferner den Schritt umfasst, die Eingangsabtastungen ($S_{IF2}$(n)) als eine Funktion der Anzahl (M) der Abtastungen zu verzögern, bevor der Schritt des Subtrahierens von jeder Eingangsabtastung ($S_{IF2}$(n)) einer entsprechenden ersten Größe ausgeführt wird.

18. Verarbeitungsverfahren nach Anspruch 17, wobei der Schritt des Bestimmens einer Anzahl (P) von Sinusfunktionen umfasst, an den Blöcken von Abtastungen ein Sinusschätzverfahren auszuführen, das ausgewählt ist aus: dem Schätzverfahren der spektralen Energiedichte (ESD), dem Multiple-Signal-Classification-Verfahren (MUSIC) und dem Pisarenko-Verfahren.

19. Verarbeitungsverfahren nach einem der Ansprüche 11 bis 18, wobei der Schritt des Filterns der Eingangsabtastungen ($S_{IF2}$(n)) umfasst, ein numerisches Filtern eines Bandpasstyps auszuführen.

20. Verfahren für eine Kommunikation zwischen einem Flugzeug und einem Bodennetz (70), das durch mindestens eine erste Kontrollstation (72a) und eine zweite Kontrollstation (72b) gebildet ist, die einen ersten Abdeckungsbereich (74a) bzw. einen zweiten Abdeckungsbereich (74b) haben, die sich teilweise überdecken, und das die Schritte umfasst:

    - Senden eines ersten Steuersignals durch die erste Kontrollstation (72a), wobei das erste Steuersignal auf einem ersten Träger bei einer ersten nominalen Frequenz amplitudenmoduliert ist;
    - Senden eines zweiten Steuersignals durch die zweite Kontrollstation (72b), wobei das zweite Steuersignal auf einem zweiten Träger bei der ersten nominalen Frequenz amplitudenmoduliert ist;
    - Empfangen des ersten und des zweiten Steuersignals durch das Flugzeug; und
    - Ausführen des Verarbeitungsverfahrens nach einem der Ansprüche 11 bis 20.

21. Kommunikationsverfahren nach Anspruch 20, wobei die Schritte des Sendens des ersten und des zweiten Steuersignals umfassen, den ersten und den zweiten Träger mit ein und demselben Informationssignal zu modulieren.

**Revendications**

1. Récepteur électronique pour des signaux modulés en amplitude, comprenant :

    - des moyens d'échantillonnage (22, 26, 28, 38), configurés pour recevoir un signal d'entrée ($s_{in}$(t)) comprenant un ou plusieurs signaux élémentaires ($s_1$(t), $s_2$(t)) modulés en amplitude à partir d'un seul et même signal de modulation (u(t)) et se chevauchant partiellement en temps et en fréquence, et pour générer une pluralité d'échantillons d'entrée ($S_{IF2}$(n)) à partir du signal d'entrée ($s_{in}$(t)) ;
    - des moyens de filtrage (44, 46), configurés pour filtrer les échantillons d'entrée ($S_{IF2}$(n)) et générer une pluralité d'échantillons à estimer ($S_{IF3,\,C}$(n)) ; et
    - des moyens d'estimation (48), connectés aux moyens de filtrage (44, 46) et configurés pour déterminer un nombre (P) de fonctions sinusoïdales sur la base des échantillons à estimer ($S_{IF3,\,C}$(n)), et pour déterminer, pour chaque fonction sinusoïdale, un ensemble de paramètres correspondant ;
    - des moyens d'élimination de porteuse (52), connectés aux moyens d'échantillonnage et aux moyens d'estimation et configurés pour générer une pluralité d'échantillons traités ($S_{IF2,\,NC}$(n)) sur la base des échantillons d'entrée ($S_{IF2}$(n)) et des ensembles de paramètres ; et
    - des moyens de transposition (54), connectés aux moyens d'estimation et aux moyens d'élimination de porteuse et configurés pour générer une pluralité d'échantillons convertis en bande de base ($S'_{BB}$(n)) sur la base des échantillons traités ($S_{IF2,\,NC}$(n)) et d'au moins un parmi les ensembles de paramètres ;

**caractérisé en ce qu'**il comprend en outre des moyens de suppression d'interférence (64), connectés aux moyens de transposition et aux moyens d'estimation et configurés pour générer une pluralité d'échantillons égalisés ($S_{BB}$(n)) sur la base des échantillons convertis en bande de base ($S'_{BB}$(n)) et des ensembles de paramètres, et dans lequel chaque ensemble de paramètres comprend une amplitude estimée respective, une fréquence estimée respective, et une phase estimée respective, et dans lequel les moyens d'élimination de porteuse (52) sont configurés pour soustraire de chaque échantillon d'entrée ($S_{IF2}$(n)) une première quantité correspondante obtenue en additionnant un nombre de contributions égal au nombre (P) de fonctions sinusoïdales, chaque contribution étant fonction de l'amplitude estimée, de la fréquence estimée, et de la phase estimée d'un ensemble de paramètres respectif.

**2.** Récepteur électronique selon la revendication 1, dans lequel les moyens de suppression d'interférence (64) sont configurés pour démoduler le signal de modulation (u(t)).

**3.** Récepteur électronique selon la revendication 1 ou 2, comprenant en outre des premiers moyens de sélection (56), connectés aux moyens d'estimation (48) et configurés pour sélectionner un ensemble de référence, ledit ensemble de référence étant l'ensemble de paramètres ayant une amplitude estimée maximale.

**4.** Récepteur électronique selon la revendication 3, dans lequel les moyens de suppression d'interférence (64) comprennent :

- des moyens de vérification (640), configurés pour vérifier si le nombre (P) de fonctions sinusoïdales est supérieur à un ;
- des seconds moyens de sélection (644), configurés pour sélectionner, dans le cas où le nombre (P) de fonctions sinusoïdales est supérieur à un, chaque ensemble de paramètres, à l'exclusion de l'ensemble de référence ; et
- des premiers moyens de calcul (646), configurés pour déterminer, pour chaque ensemble de paramètres sélectionné, une quantité respective $\rho_k$, indiquant le rapport entre l'amplitude estimée de l'ensemble de paramètres sélectionné et l'amplitude estimée de l'ensemble de référence, une quantité respective $\Delta f_{rk}$, indiquant la différence entre la fréquence estimée de l'ensemble de paramètres sélectionné et la fréquence estimée de l'ensemble de référence, et une quantité respective $\Delta\varphi_{rk}$, indiquant la différence entre la phase estimée de l'ensemble de paramètres sélectionné et la phase estimée de l'ensemble de référence.

**5.** Récepteur électronique selon la revendication 4, dans lequel les moyens de suppression d'interférence (64) comprennent en outre des seconds moyens de calcul (648), configurés pour générer les échantillons égalisés ($S_{BB}(n)$) sur la base des échantillons convertis en bande de base ($S'_{BB}(n)$) et des quantités $\rho_k$, $\Delta f_{rk}$ et $\Delta\varphi_{rk}$ déterminées.

**6.** Récepteur électronique selon l'une quelconque des revendications 3 à 5, dans lequel lesdits moyens de transposition (54) comprennent :

- des moyens de multiplication (58), connectés aux moyens d'élimination de porteuse (52) et aux premiers moyens de sélection (56) et configurés pour multiplier chaque échantillon traité ($S_{IF2,\,NC}(n)$) par une seconde quantité correspondante qui est une fonction d'au moins un paramètre parmi la fréquence estimée, l'amplitude estimée, et la phase estimée de l'ensemble de référence, afin de générer une pluralité d'échantillons intermédiaires ($S_{IF2,\,D+S}(n)$).

**7.** Récepteur électronique selon la revendication 6, comprenant en outre un filtre numérique passe-bas (60), configuré pour filtrer les échantillons intermédiaires ($S_{IF2,\,D+S}(n)$).

**8.** Récepteur électronique selon l'une quelconque des revendications précédentes, dans lequel les moyens d'estimation (48) sont en outre configurés pour traiter les échantillons à estimer ($S_{IF3,\,C}(n)$) en blocs d'échantillons, chaque bloc d'échantillons étant formé d'un nombre (M) d'échantillons ; ledit récepteur électronique comprenant en outre un retardateur (50), agencé entre les moyens d'échantillonnage (22, 26, 28, 38) et les moyens d'élimination de porteuse (52) et configuré pour retarder les échantillons d'entrée ($S_{IF2}(n)$) en fonction dudit nombre (M) d'échantillons.

**9.** Récepteur électronique selon la revendication 8, dans lequel les moyens d'estimation (48) sont en outre configurés pour effectuer, sur lesdits blocs d'échantillons, une méthode d'estimation sinusoïdale choisie parmi : la méthode d'estimation de densité spectrale d'énergie (ESD) selon la méthode de Prony, la méthode de classification de signal multiple (MUSIC), et la méthode de Pisarenko.

**10.** Récepteur électronique selon l'une quelconque des revendications précédentes, dans lequel les moyens de filtrage (44, 46) comprennent un filtre passe-bande numérique (44).

**11.** Procédé pour traiter des signaux modulés en amplitude, comprenant les étapes consistant à :

- recevoir et échantillonner un signal d'entrée ($s_{in}(t)$) comprenant un ou plusieurs signaux élémentaires ($s_1(t)$, $s_2(t)$) modulés en amplitude à partir d'un seul et même signal de modulation (u(t)) et se chevauchant partiellement en temps et en fréquence, pour générer une pluralité d'échantillons d'entrée ($S_{IF2}(n)$) ;
- filtrer les échantillons d'entrée ($S_{IF2}(n)$) pour générer une pluralité d'échantillons à estimer ($S_{IF3,\,C}(n)$) ;
- déterminer un nombre (P) de fonctions sinusoïdales sur la base des échantillons à estimer ($S_{IF3,\,C}(n)$) ; et

- déterminer, pour chaque fonction sinusoïdale, un ensemble de paramètres correspondant ;
- générer une pluralité d'échantillons traités ($S_{IF2, NC}(n)$) sur la base des échantillons d'entrée ($S_{IF2}(n)$) et des ensembles de paramètres ; et
- générer une pluralité d'échantillons convertis en bande de base ($S'_{BB}(n)$) sur la base des échantillons traités ($S_{IF2, NC}(n)$) et d'au moins un parmi les ensembles de paramètres ;

**caractérisé en ce qu'**il comprend en outre l'étape consistant à générer une pluralité d'échantillons égalisés ($S_{BB}(n)$) sur la base des échantillons convertis en bande de base ($S'_{BB}(n)$) et des ensembles de paramètres, et dans lequel chaque ensemble de paramètres comprend une amplitude estimée respective, une fréquence estimée respective, et une phase estimée respective, et dans lequel ladite étape consistant à générer une pluralité d'échantillons traités ($S_{IF2, NC}(n)$) comprend la soustraction de chaque échantillon d'entrée ($S_{IF2}(n)$) d'une première quantité correspondante obtenue en additionnant un nombre de contributions égal au nombre (P) de fonctions sinusoïdales, chaque contribution étant fonction de l'amplitude estimée, de la fréquence estimée, et de la phase estimée d'un ensemble de paramètres respectif.

12. Procédé de traitement selon la revendication 11, dans lequel ladite étape consistant à générer une pluralité d'échantillons égalisés ($S_{BB}(n)$) comprend la démodulation dudit signal de modulation (u(t)).

13. Procédé de traitement selon la revendication 11 ou 12, comprenant en outre l'étape consistant à sélectionner un ensemble de référence, ledit ensemble de référence étant l'ensemble de paramètres ayant une amplitude estimée maximale.

14. Procédé de traitement selon la revendication 13, dans lequel ladite étape consistant à générer une pluralité d'échantillons égalisés ($S_{BB}(n)$) comprend les étapes consistant à :

- vérifier si le nombre (P) de fonctions sinusoïdales est supérieur à un ;
- sélectionner, dans le cas où le nombre (P) de fonctions sinusoïdales est supérieur à un, chaque ensemble de paramètres, à l'exclusion de l'ensemble de référence ; et
- déterminer, pour chaque ensemble de paramètres sélectionné, une quantité respective $\rho_k$, indiquant le rapport entre l'amplitude estimée de l'ensemble de paramètres sélectionné et l'amplitude estimée de l'ensemble de référence, une quantité respective $\Delta f_{rk}$, indiquant la différence entre la fréquence estimée de l'ensemble de paramètres sélectionné et la fréquence estimée de l'ensemble de référence, et une quantité respective $\Delta\varphi_{rk}$, indiquant la différence entre la phase estimée de l'ensemble de paramètres sélectionné et la phase estimée de l'ensemble de référence.

15. Procédé de traitement selon la revendication 14, dans lequel ladite étape consistant à générer une pluralité d'échantillons égalisés ($S_{BB}(n)$) comprend en outre la génération des échantillons égalisés ($S_{BB}(n)$) en fonction des échantillons convertis en bande de base ($S'_{BB}(n)$) et des quantités $\rho_k$, $\Delta f_{rk}$ et $\Delta\varphi_{rk}$ déterminées.

16. Procédé de traitement selon l'une quelconque des revendications 13 à 15, dans lequel ladite étape consistant à générer une pluralité d'échantillons convertis en bande de base ($S'_{BB}(n)$) comprend l'étape consistant à multiplier chaque échantillon traité ($S_{IF2, NC}(n)$) par une seconde quantité correspondante, qui est une fonction d'au moins un paramètre parmi la fréquence estimée, l'amplitude estimée, et la phase estimée de l'ensemble de référence, afin de générer une pluralité d'échantillons intermédiaires ($S_{IF2, D+S}(n)$).

17. Procédé de traitement selon l'une quelconque des revendications 11 à 16, dans lequel ladite étape consistant à déterminer un nombre (P) de fonctions sinusoïdales comprend le traitement des échantillons à estimer ($S_{IF3, c}(n)$) en blocs d'échantillons, chaque bloc d'échantillons étant formé d'un nombre (M) d'échantillons ; ledit procédé comprenant en outre l'étape consistant à retarder les échantillons d'entrée ($S_{IF2}(n)$) en fonction dudit nombre (M) d'échantillons, avant d'effectuer l'étape consistant à soustraire de chaque échantillon d'entrée ($S_{IF2}(n)$) une première quantité correspondante.

18. Procédé de traitement selon la revendication 17, dans lequel l'étape consistant à déterminer un nombre (P) de fonctions sinusoïdales comprend l'exécution, sur lesdits blocs d'échantillons, d'une méthode d'estimation sinusoïdale choisie parmi : la méthode d'estimation de densité spectrale d'énergie (ESD) selon la méthode de Prony, la méthode de classification de signal multiple (MUSIC), et la méthode de Pisarenko.

19. Procédé de traitement selon l'une quelconque des revendications 11 à 18, dans lequel l'étape consistant à filtrer les échantillons d'entrée ($S_{IF2}$(n)) comprend l'exécution d'un filtrage numérique d'un type passe-bande.

20. Procédé pour la communication entre un aéronef et un réseau terrestre (70) formé d'au moins une première station de commande (72a) et une seconde station de commande (72b), qui ont, respectivement, une première zone de couverture (74a) et une seconde zone de couverture (74b) qui se chevauchent partiellement, comprenant les étapes consistant à :

- émettre un premier signal de commande par la première station de commande (72a), ledit premier signal de commande étant modulé en amplitude sur une première porteuse à une première fréquence nominale ;
- émettre un second signal de commande par la seconde station de commande (72b), ledit second signal de commande étant modulé en amplitude sur une seconde porteuse à la première fréquence nominale ;
- recevoir, par l'aéronef, les premier et second signaux de commande ; et
- effectuer le procédé de traitement selon l'une quelconque des revendications 11 à 20.

21. Procédé de communication selon la revendication 20, dans lequel les étapes consistant à émettre les premier et second signaux de commande comprennent la modulation en amplitude des première et seconde porteuses avec un seul et même signal d'information.

FIG. 1

FIG. 3

EP 2 309 652 B1

FIG. 2

FIG. 9

FIG 4

FIG 5

EP 2 309 652 B1

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1808965 A
- US 6072994 A
- WO 2004114617 A

**Non-patent literature cited in the description**

- **L. MARPLE.** Spectral line analysis by Pisarenko and Prony methods. *IEEE International Conference on Acoustics, Speech, and Signal Processing (ICASSP) '79,* April 1979, vol. 4, 159-161
- **J.F. HAUER ; C.J. DEMEURE ; L.L. SCHARF.** Initial results in Prony analysis of power system response signals. *IEEE Transactions on Power Systems,* February 1990, vol. 5 (1), 80-89
- **V.F. PISARENKO.** The retrieval of Harmonics from a Covariance Function. *Geophysical Journal of the Royal Astronomical Society,* 1973, vol. 33 (3), 347-366
- **M.H. HAYES.** Statistical Digital Signal Processing and Modeling. John Wiley & Sons, Inc, 1996
- **R.O. SCHMIDT.** Multiple Emitter Location and Signal Parameter Estimation. *IEEE Transactions on Antennas and Propagation,* March 1986, vol. 34 (3), 276-280
- **H. HAYES.** Statistical Digital Signal Processing and Modeling. John Wiley & Sons Inc, 1996